# EUROPEAN PATENT APPLICATION

(11) **EP 4 480 338 A1**
(43) Date of publication of application: **25.12.2024**
(21) Application number: 23817280.3
(22) Date of filing: 07.06.2023
(51) Int. Cl.: A42B 3/20, A42B 3/04, A42B 3/32

(54) **DUSTPROOF ASSEMBLY OF HELMET AND HELMET**

(30) Priority: 10.05.2023 CN 202310522306
(71) Applicant: Hard Materials Technologies G.m.b.H, 9170 Mertizig (LU)
(72) Inventor: MENG, Wenyu, 9170 Mertizig (LU)
(74) Representative: Ridderbusch, Oliver
(86) International application number: PCT/CN2023/098846
(87) International publication number: WO 2024/229915

(57) **Abstract**

The present invention relates to the field of mining technologies, and more particularly, to a helmet and a dustproof assembly thereof. The dustproof assembly includes a mask, a first fastening buckle, a second fastening buckle, a first dustproof cover, and a second dustproof cover; the first fastening buckle and the second fastening buckle are located at side edges of a window respectively and are disposed on both sides of the helmet respectively; each of both ends of the mask is provided with at least one fixing hole; a latch is detachably disposed in the fixing holes respectively; the mask is detachably connected to the first fastening buckle and the second fastening buckle through the latches respectively, so that the mask is movably or detachably disposed on the surface of the window of the helmet; a first clamping buckle and a second clamping buckle are also disposed on the side edge of the helmet respectively; the first dustproof cover and the second dustproof cover are detachably disposed on the first clamping buckle and the second clamping buckle respectively; and when the first dustproof cover and the second dustproof cover are detectably disposed on the first clamping buckle and the second clamping buckle respectively, the first dustproof cover and the second dustproof cover are in contact and connection with both ends of the mask respectively. Therefore, mineral ash entering the helmet is reduced.

## Description

### TECHNICAL FIELD

The present invention relates to the field of mining technologies, and more particularly, to a helmet and a dustproof assembly thereof.

### BACKGROUND ART

Mineral resources are the products of the earth's crust in its long-term formation, development and evolution, and are formed by the accumulation of minerals in nature under certain geological conditions and through certain geological processes. Different geological processes can form different types of minerals. China is the country with a vast territory, superior metallogenic geological conditions, complete mineral varieties and abundant total resources, and is a big country with its own mineral resources. In the more than 3 billion years from the Archean to the Cenozoic, the land of China has experienced many periods of extensive and intense speech activities, forming various types of magmatic rocks, which are widely distributed in all parts of the country. China is an important part of the Eurasia and is a product of crustal movement and tectonic evolution throughout the country. From the perspective of plate tectonics, China is located in the bordering area of the Eurasian plate and is affected by several different tectonic units, thereby creating good geological tectonic conditions for the formation of diversified minerals. It is precisely because of the above factors that China has become a major country in mineral resources.

Coal mines are one of minerals in large output as excavated by human beings, and are located deep underground. Therefore, large instruments cannot enter mine holes in general cases, and most of them need to be excavated manually. During manual excavation, a helmet is a necessary safety device. A large amount of mineral ash will be produced by workers during excavation. If a dustproof treatment is not performed for the workers, the mineral ash will enter the workers' bodies through the respiratory tracts; and respiratory diseases will be caused to the workers if they are in this environment for a long time.

In summary, the technical problem to be actually solved by the present invention is how to reduce the mineral ash to enter the helmet through the helmet.

### SUMMARY OF THE INVENTION

In order to overcome the above-mentioned technical defects, an object of the present invention is to provide a helmet and a dustproof component thereof, and reduce the mineral ash to enter the helmet through the helmet.

The present invention discloses a dustproof assembly of a helmet. The dustproof assembly includes a mask, a first fastening buckle, a second fastening buckle, a first dustproof cover, and a second dustproof cover, wherein
a window is disposed on the front of the helmet, and allows a user to view therethrough;
the first fastening buckle and the second fastening buckle are located at the side edges of the window respectively and are disposed on both sides of the helmet respectively;
the mask is compatible with the size of the window on the front of the helmet, and each of both ends of the mask is provided with at least one fixing hole; a latch is detachably disposed in the fixing holes respectively; after the latches are inserted into the fixing holes, the mask is detachably connected to the first fastening buckle and the second fastening buckle through the latches respectively, so that the mask is movably or detachably disposed on the surface of the window of the helmet; and
a first clamping buckle and a second clamping buckle are also disposed on both sides of the helmet respectively; the first dustproof cover and the second dustproof cover are detachably disposed on the first clamping buckle and the second clamping buckle respectively; and when the first dustproof cover and the second dustproof cover are detectably disposed on the first clamping buckle and the second clamping buckle respectively, the first dustproof cover and the second dustproof cover are in contact and connection with both ends of the mask respectively.

Preferably, the first fastening buckle and the second fastening buckle are disposed on the side edges of the window via bolts and/or screws, respectively.

Preferably, when the first fastening buckle and the second fastening buckle are disposed on the window respectively, the first fastening buckle and the second fastening buckle are disposed on the outer surfaces on both sides of the helmet respectively, and a fastener is disposed on the inner surfaces, corresponding to the outer surfaces on both sides of the helmet, of the first fastening buckle and the second fastening buckle respectively; and
the first fastening buckle and the second fastening buckle are connected to the fasteners on the inner surfaces on both sides of the helmet respectively when being disposed on the outer surfaces on both sides of the helmet through the bolts and/or screws respectively.

Preferably, a fitting notch is formed in both ends of the mask respectively, and a fitting protrusion is disposed on the first dustproof cover and the second dustproof cover respectively; and
the fitting protrusions on the first dustproof cover and the second dustproof cover are embedded into the fitting notches in both ends of the mask respectively when the first dustproof cover and the second dustproof cover are in contact and connection with both ends of the mask respectively.

Preferably, at least two fixing holes are formed in both ends of the mask respectively, and the fixing holes in the same end of the mask are symmetrically formed in both ends of each fitting notch; when the latches are inserted into the fixing holes, the latches at the same end of the mask are inserted into all the fixing holes in the same end of the mask at the same time; and when the mask is detachably connected to the first fastening buckle and the second fastening buckle through the latches respectively, the first fastening buckle and the second fastening buckle are connected to the latches at the fitting notch sections at both ends of the mask, respectively.

Preferably, a fitting transition table is disposed on the fitting notches in both ends of the mask respectively; the fitting transition tables are disposed in an extension direction of the fitting protrusions when the fitting protrusions on the first dustproof cover and/or the second dustproof cover are embedded into the fitting notches, and at least one end of each fitting notch is in contact and connection with at least one end of the corresponding fitting transition table; and the fitting transition tables are located on the outer surfaces at both ends of the mask.

Preferably, when the first dustproof cover and the second dustproof cover are disposed on the side edges of the helmet through the first clamping buckle and the second clamping buckle respectively, the first dustproof cover and the second dustproof cover are located on the outer surfaces of the side edges of the helmet respectively; and after the user wears the helmet, the first clamping buckle and the second clamping buckle correspond to both ears of the user in position, respectively.

In view of this, a second object of the present invention is to provide a helmet. The helmet is at least provided with one dustproof assembly as described above.

Due to the adoption of the above technical solution, compared with the prior art, the present invention has the following beneficial effects: according to the dustproof assembly of the helmet, the first dustproof cover and the second dustproof cover are used to reduce mineral ash entering the inside of the helmet from junctions between both ends of the mask and the helmet, thereby reducing the probability of respiratory diseases for miners; in addition, after the cooperation of the fitting notches and the fitting protrusions of the dustproof assembly of the helmet of the present invention, the fitting transition table is then used to transition the junctions between the fitting notches and the fitting protrusions, thereby further the probability of mineral ash entering into the helmet; and further, the present invention is simple in structure for implementation and application.

### BRIEF DESCRIPTION OF THE DRAWINGS

FIG. 1 is a schematic exploded view of a helmet and a dustproof assembly thereof of the present invention;
FIG. 2 is a schematic diagram of a helmet and a dustproof assembly thereof of the present invention; and
FIG. 3 is a schematic diagram of connection of a dustproof assembly of a helmet and a mask of the helmet with a first dustproof cover and a second dustproof cover of the present invention.

Reference symbols represent the following components:
1-helmet; 2-mask; 3-first fastening buckle; 4-second fastening buckle; 5-first dustproof cover; 6-second dustproof cover; 7-window; 8-first clamping buckle; 9-fitting notch; 10-fitting protrusion; 11-fitting transition table; 12-fixing hole; 13-bolt and/or screw.

### DETAILED DESCRIPTION OF THE PREFERRED EMBODIMENTS

The advantages of the present invention are further described below in conjunction with the accompanying drawings and specific embodiments.

The exemplary embodiments will be described in detail herein, and examples thereof are shown in the accompanying drawings. When the following description refers to the drawings, unless otherwise indicated, the same numbers in different drawings indicate the same or similar elements. The implementations described the following exemplary embodiments are not all the embodiments consistent with the present disclosure. On the contrary, these embodiments are simply examples of devices and methods consistent with some aspects of the present disclosure, as detailed in the appended claims.

The terms used in the present disclosure are for the purpose of describing particular embodiments only and are not intended to limit the present disclosure. The singular forms "a/an", "said" and "the" used in the present disclosure and the appended claims are intended to include the plural forms as well, unless the context clearly indicates otherwise. It should also be understood that the term "and/or" as used herein includes any and all combinations of one or more related listed items.

It is to be understood that, although the terms first, second, third, etc. may be used to describe various information in the present disclosure, these should not be limited to these terms. These terms are only used to distinguish information of the same type from each other. For example, "first information" may also be referred to as "second information" without departing from the scope of the present disclosure. Similarly, "second information" may also be referred to as "first information". Depending on the context, the words "if" as used here may be interpreted as "in the event of..." or "when..." or "in response to determining".

In the description of the present invention, it should be understood that the orientation or position relations indicated via terms of "longitudinal", "transverse", "upper", "lower", "front", "rear", "left", "right", "vertical" "horizontal", "top", "bottom", "inner", "outer", and the like are based on orientation or position relations shown in the drawings only to describe the present invention conveniently and simplify the description, but not indicate or imply that referred devices or elements must have particular orientations or be constructed and operated with the particular orientation, so that they cannot be construed as limiting of the present invention.

In the description of the present invention, it should be noted that, unless otherwise definitely specified and limited, the terms "mounted", "connected with each other", and "connected to/with" need to be broadly understood. For example, connection may be mechanical connection, or electrical connection; or communication inside two elements; or direct connection, or indirect connection via an intermediation. For those of ordinary skill in the art, the specific meanings of the above terms can be understood according to specific cases.

In the following description, the use of suffixes such as "module", "component" or "unit" used to denote elements is only conducive to the description of the present invention, and has no special meaning themselves. Therefore, "module" and "component" may be used in a mixed manner.

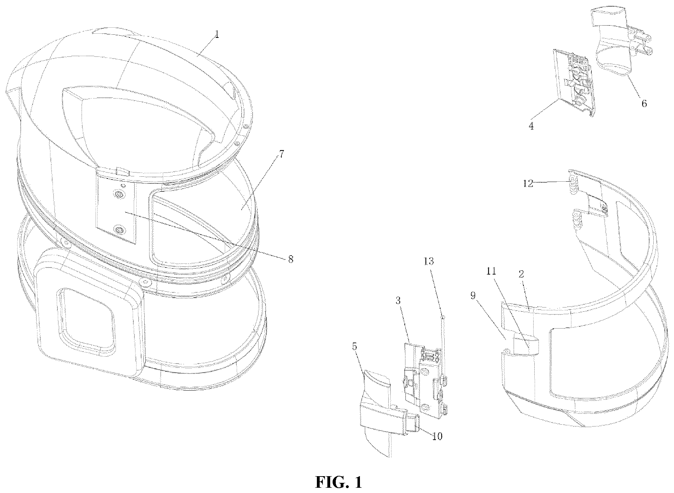

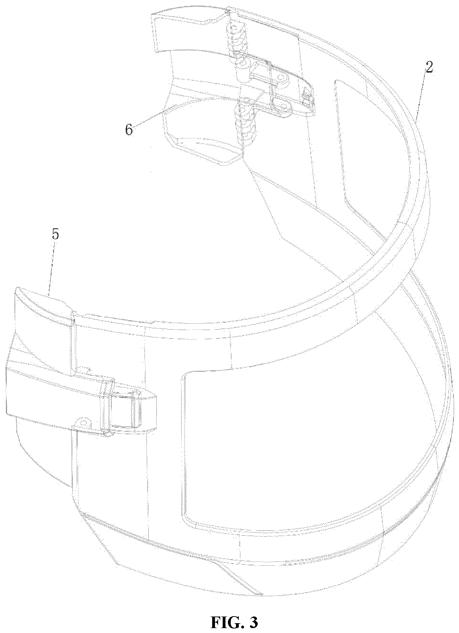

As shown in FIGs. 1 to 3, an embodiment provides a dustproof assembly of a helmet 1. The dustproof assembly described in this embodiment is mainly applied in the helmet 1 used in some working environments with larger dust, and may also be applied in other helmets 1 at the same time. The dustproof assembly of the helmet 1 in this embodiment mainly includes a mask 2, a first fastening buckle 3, a second fastening buckle 4, a first dustproof cover 5, and a second dustproof cover 6. It should be noted that the mask 2 is mainly used for isolating most of mineral ash, and there is also a transparent part on the mask 2 at the same time. The transparent part corresponds to the window 7 on the front of the helmet 1, so that the miner who wears the helmet 1 performs an observation through the window 7 of the helmet 1 and the transparent part on the mask 2. The first fastening buckle 3 and the second fastening buckle 4 are respectively used for disposing the mask 2 on the helmet 1 detachably and/or movably, so that the mask 2 is mounted on the helmet 1 or disassembled from the helmet 1 according to use needs of the miner. In addition, the mask 2 may be moved with the first fastening buckle 3 and the second fastening buckle 4 of the helmet 1 through both ends of the mask 2. For example, as shown in FIG. 1, when the right end of the mask 2 is disassembled from the second fastening buckle 4, and when the left end of the mask 2 is not disassembled from the first fastening buckle 3, the mask 2 can rotate with the first fastening buckle 3 as a circle center, so that the mask 2 can be placed on the side surface of the first fastening buckle 3 of the helmet 1 as shown in FIG. 1 when the miner does not need to use the mask 2, so it is not necessary for the miner to find a place to put the helmet 1 or hold it in his hand after the whole mask 2 is removed, thereby affecting the work efficiency and work progress of the miner. The first dustproof cover 5 and the second dustproof cover 6 are mainly used to prevent mineral ash from entering the inside of the helmet 1 from both sides of the helmet 1, in particular from the junction between the mask 2 and the helmet 1. The specific relationship is as follows: the window 7 is disposed on the front of the helmet 1 as shown in FIG. 1, and the window 7 may be a window 7 without any parts, or may be made of the same material as the transparent part of the mask 2; when the window 7 has a transparent part, the effect of preventing the mineral ash from entering the helmet 1 is better at this moment, so the mineral ash will also be located between the window 7 of the helmet 1 and the mask 2 even after entering through the junction between the mask 2 and the helmet 1 at this moment, and the mask 2 can be directly removed to complete the cleaning in the course of cleaning, so the cleaning is more convenient. The window 7 is mainly used for the user to perform observation. It should be noted here that the front of the above description refers to a side faced by the miner when the miner wears the helmet 1, so the front here is not a description of pointing, but a description of a position. Meanwhile, the first fastening buckle 3 and the second fastening buckle 4 are disposed on the side edges of the window 7 respectively and located on both sides of the helmet 1 respectively. As shown in FIG. 1, the first fastening buckle 3 is disposed on the left side of the helmet 1, the second fastening buckle 4 is disposed on the right side of the helmet 1, and the first fastening buckle 3 and the second fastening buckle 4 are disposed on the outer surfaces on both sides of the helmet 1 respectively. It should be noted that the size of the mask 2 is compatible with the size of the window 7 on the front of the helmet 1. The compatibility here means that the size of the entire mask 2 shall not be less than the size of window 7, and the size of the transparent part of the entire mask 2 may be smaller than the size of window 7 of the helmet 1, or larger than the size of the window 7 of the helmet 1, or the same as the size of the window 7 of the helmet 1. Meanwhile, at least one fixing hole 12 is formed in both ends of the mask 2 respectively, and the latches are detachably disposed in the fixing holes 12 respectively. It should be noted that both ends of the mask 2 refer to a left end and a right end of the mask 2 as shown in FIGs. 1 to 3, and the fixing holes 12 may optionally be formed in the inner surfaces of the left and right ends of the mask 2. When the mask 2 needs to be disposed on the helmet 1, the latches are inserted into the fixing holes 12, and then the mask 2 is detachably connected to the first fastening buckle 3 and the second fastening buckle 4 on the helmet 1 respectively through a portion in which the latches at both ends of the helmet 2 are inserted or not inserted into the fixing holes 12. Therefore, the mask 2 is disposed on the surface of the window 7 of the helmet 1 movably or detachably, i.e., on the front of the helmet 1. It should be noted here that when the mask 2 is movably disposed on the front of the helmet 1, and when the mask 2 needs to be moved, the mask 2 rotates around the second fastening buckle 4 or the first fastening buckle 3 after disassembling one end of the mask 2 from the first fastening buckle 3 or the second fastening buckle 4 of the helmet 1.

It should be noted that a first clamping buckle 8 and a second clamping buckle (not shown, corresponding to the first clamping buckle 8 in position) are also disposed on both sides of the helmet 1 respectively, that is, the first clamping buckle 8 and the second clamping buckle on the left side and the right side of the helmet 1 shown in FIG. 1 respectively; when the first dustproof cover 5 and the second dustproof cover 6 are detachably disposed on the first clamping buckle 8 and the second clamping buckle respectively, and when the first dustproof cover 5 and the second dustproof cover 6 are detachably disposed on the first clamping buckle 8 and the second clamping buckle respectively, the first dustproof cover 5 and the second dustproof cover 6 are in contact and connection with both ends of the mask 2 respectively, thereby preventing the mineral ash from entering the helmet 1 through a gap between the mask 2 and the helmet 1. It should be noted that a connecting mode of the first clamping buckle 8 and the second clamping buckle respectively to the first dustproof cover 5 and the second dustproof cover 6 is specifically described, which is the technical means known to those skilled in the art, so there should be no reason for insufficient disclosure here, and the shapes and sizes of the first dustproof cover 5 and the second dustproof cover 6 are described in a limited manner. Here, the first dustproof cover 5 and the second dustproof cover 6 should be selected as large as possible to make the first dustproof cover 5 and the second dustproof cover 6 as large, so that the first dustproof cover 5 and the second dustproof cover 6 are respectively connected to both ends of the mask 2 at the same time to cover the first clamping buckle 8 and the second clamping buckle respectively. In addition, when the first dustproof cover 5 and the second dustproof cover 6 are respectively disposed on the first clamping buckle 8 and the second clamping buckle, the first dustproof cover 5 and the second dustproof cover 6 are in close contact with the outer surface of the helmet 1 respectively. It should be noted that the shapes of the first dustproof cover 5 and the second dustproof cover 6 may be selected as shapes shown in FIGs. 1 to 3.

It should be noted that the first fastening buckle 3 and the second fastening buckle 4 include, but are not limited to, being disposed on the side surfaces of the helmet 1 on the side edges of the window 7 through bolts and/or screws 13. When the first fastening buckle 3 and the second fastening buckle 4 are disposed on the side surface of the helmet 1 on the side edges of the window 7 respectively, the first fastening buckle 3 and the second fastening buckle 4 are disposed on the outer surfaces on both sides of the helmet 1 respectively, and a fastener is disposed on the inner surfaces, corresponding to the outer surfaces on both sides of the helmet 1, of the first fastening buckle 3 and the second fastening buckle 4 respectively. That is, the first fastening buckle 3 and the second fastening buckle 4 are connected to the fasteners through bolts and/or screws 13, so that the first fastening buckle 3 and the second fastening buckle 4 are respectively fixed on the outer surface of the helmet 1.

It should be noted that a fitting notch 9 is formed in both ends of the mask 2 respectively. The fitting notches 9 are sunken from both ends of the mask 2 oppositely, so that the fitting notches 9 are formed. A fitting protrusion 10 is disposed on the first dustproof cover 5 and the second dustproof cover 6 respectively. The fitting protrusions 10 protrude out of the mask 2 from contact ends of the first dustproof cover 5 and the second dustproof cover 6 with the mask 2, so as to form the fitting protrusions on the first dustproof cover 5 and the second dustproof cover 6 respectively. When the first dustproof cover 5 and the second dustproof cover 6 are disposed on the helmet 1 through the first fastening buckle 8 and the second fastening buckle respectively, and when the first dustproof cover 5 and the second dustproof cover 6 are in contact and connection with both ends of the mask 2 respectively, the fitting protrusions 10 on the first dustproof cover 5 and the second dustproof cover 6 are respectively embedded in the fitting notches 9 in both ends of the mask 2, so as to prevent the first dustproof cover 5 and the second dustproof cover 6 from displacing and rotating on both sides of the helmet 1 respectively, so that the first dustproof cover 5 and the second dustproof cover 6 are not in contact with both ends of the mask 2.

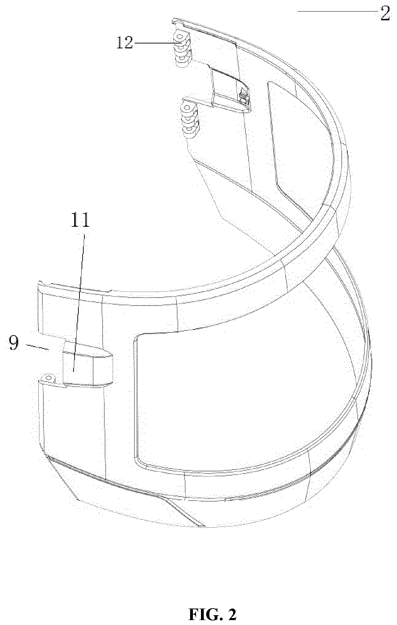

It should be noted that at least two fixing holes 12 are formed in both ends of the mask 2 respectively, and the fixing holes 12 in the same end of the mask 2 are symmetrically formed in both ends of each fitting notch 9. As shown in FIG. 2, when a plurality of fixing holes 12 among the fixing holes 12 in the same end of the mask 2 is respectively distributed vertically in the fitting notches 9, the symmetry described herein refers to the vertical distribution of the fitting notches 9, but the number of the fixing holes 12 in the upper and lower sides of the fitting notches 9 is not described. When the latches are inserted into the fixing holes 12, the latches at the same end of the mask 2 are inserted into all the fixing holes 12 in the same end of the mask 12 at the same time; and when the mask 2 is detachably connected to the first fastening buckle 3 and the second fastening buckle 4 through the latches respectively, the first fastening buckle 3 and the second fastening buckle 4 are connected to the latches at the fitting notch sections 9 at both ends of the mask 2, respectively.

It should be noted that, as shown in FIGs. 1 to 3, a fitting transition table 11 is disposed in the fitting notches 9 in both ends of the mask 2 respectively. The fitting transition tables 11 are disposed in an extension direction of the fitting protrusions when the fitting protrusions 10 on the first dustproof cover 5 and/or the second dustproof cover 6 are embedded into the fitting notches 9, and at least one end of each fitting notch 9 is in contact and connection with at least one end of the corresponding fitting transition table 11; and the fitting transition tables 11 are located on the outer surfaces on both ends of the mask 2. That is, the outer surfaces of the fitting transition table 11 at both ends of the mask 2 protrude, and the fitting transition tables 11 at both ends of the mask 2 are located on the same space line with the fitting notches 9 at both ends of the mask 2, that is, the fitting transition tables 11 at both ends of the mask 2 are at the same height as the fitting notches 9 at both ends of the mask 2 respectively. It should be noted that the shape of the fitting transition tables 11 is not limited here, which specifically refers to the shape of the fitting transition table 11 shown in FIGs. 1 to 3.

It should be noted that, when the first dustproof cover 5 and the second dustproof cover 6 are disposed on both sides of the helmet 1 through the first clamping buckle 8 and the second clamping buckle respectively, the first dustproof cover 5 and the second dustproof cover 6 are located on the outer surfaces on both sides of the helmet 1 respectively. In addition, after the user wears the helmet 1, the first clamping buckle 8 and the second clamping buckle correspond to both ears of the user in position, respectively. Therefore, after the first dustproof cover 5 and the second dustproof cover 6 are respectively disposed on the helmet 1 through the first fastening buckle 8 and the second fastening buckle, the first dustproof cover 5 and the second dustproof cover 6 are located at positions on the outer surfaces, corresponding to the ears of the miner, of the helmet 1 and are in contact and connection with the mask 2.

An embodiment further provides a helmet 1. The helmet 1 is at least provided with one dustproof assembly described in the above embodiment.

It should be noted that the embodiments of the present invention have better implementation and are not intended to limit the present invention in any form. A person skilled in the art may change or modify the disclosed technical content into equivalent effective embodiments. However, without departing from the content of the technical solution of the present invention, any amendments or equivalent changes and modifications made to the above embodiments based on the technical essence of the present invention still fall within the scope of the technical solution of the present invention.

## Claims

1. A dustproof assembly of a helmet, the dustproof assembly comprising a mask, a first fastening buckle, a second fastening buckle, a first dustproof cover, and a second dustproof cover, wherein
a window is disposed on the front of the helmet, and allows a user to view therethrough; the first fastening buckle and the second fastening buckle are located at the side edges of the window respectively and are disposed on both sides of the helmet respectively;
the mask is compatible with the size of the window on the front of the helmet, and each of both ends of the mask is provided with at least one fixing hole; a latch is detachably disposed in the fixing holes respectively; after the latches are inserted into the fixing holes, the mask is detachably connected to the first fastening buckle and the second fastening buckle through the latches respectively, so that the mask is movably or detachably disposed on the surface of the window of the helmet; and
a first clamping buckle and a second clamping buckle are also disposed on the side edges of the helmet respectively; the first dustproof cover and the second dustproof cover are detachably disposed on the first clamping buckle and the second clamping buckle respectively; and when the first dustproof cover and the second dustproof cover are detectably disposed on the first clamping buckle and the second clamping buckle respectively, the first dustproof cover and the second dustproof cover are in contact and connection with both ends of the mask respectively.

2. The dustproof assembly according to claim 1, wherein the first fastening buckle and the second fastening buckle are disposed on the side edges of the window through bolts and/or screws respectively.

3. The dustproof assembly according to claim 2, wherein when the first fastening buckle and the second fastening buckle are disposed on the window respectively, the first fastening buckle and the second fastening buckle are disposed on the outer surfaces on both sides of the helmet respectively, and a fastener is disposed on the inner surfaces, corresponding to the outer surfaces on both sides of the helmet, of the first fastening buckle and the second fastening buckle; and
the first fastening buckle and the second fastening buckle are connected to the fasteners on the inner surfaces in both sides of the helmet respectively when being disposed on the outer surfaces on both sides of the helmet through the bolts and/or screws respectively.

4. The dustproof assembly according to claim 1, wherein a fitting notch is formed in both ends of the mask respectively, and a fitting protrusion is disposed on the first dustproof cover and the second dustproof cover respectively; and
the fitting protrusions on the first dustproof cover and the second dustproof cover are embedded into the fitting notches in both ends of the mask respectively when the first dustproof cover and the second dustproof cover are in contact and connection with both ends of the mask respectively.

5. The dustproof assembly according to claim 4, wherein at least two fixing holes are formed in both ends of the mask respectively, and the fixing holes in the same end of the mask are symmetrically formed in both ends of each fitting notch; when the latches are inserted into the fixing holes, the latches at the same end of the mask are inserted into all the fixing holes in the same end of the mask at the same time; and when the mask is detachably connected to the first fastening buckle and the second fastening buckle through the latches respectively, the first fastening buckle and the second fastening buckle are connected to the latches at the fitting notch sections at both ends of the mask, respectively.

6. The dustproof assembly according to claim 4, wherein a fitting transition table is disposed on the fitting notches in both ends of the mask respectively; the fitting transition tables are disposed in an extension direction of the fitting protrusions when the fitting protrusions on the first dustproof cover and/or the second dustproof cover are embedded into the fitting notches, and at least one end of each fitting notch is in contact and connection with at least one end of the corresponding fitting transition table; and the fitting transition tables are located on the outer surfaces at both ends of the mask.

7. The dustproof assembly according to claim 1, wherein when the first dustproof cover and the second dustproof cover are disposed on the side edges of the helmet through the first clamping buckle and the second clamping buckle respectively, the first dustproof cover and the second dustproof cover are located on the outer surfaces of the side edges of the helmet respectively; and after the user wears the helmet, the first clamping buckle and the second clamping buckle correspond to both ears of the user in position, respectively.

8. A helmet, which is at least provided with the dustproof assembly according to any of claims 1 to 7.
